# EUROPÄISCHE PATENTSCHRIFT

(11) **EP 0 481 036 B1**
(45) Veröffentlichungstag und Bekanntmachung des Hinweises auf die Patenterteilung: **23.08.1995**
(21) Anmeldenummer: 91907807.1
(22) Anmeldetag: 02.05.1991
(51) Int. Cl.: H01M 2/36, F16K 31/20

(54) **SCHWIMMERVENTIL FÜR FÜLLANLAGEN, INSBESONDERE ZUM FÜLLEN VON ELEKTRISCHEN TRAKTIONSBATTERIEN**
FLOAT VALVE FOR CONTAINER-FILLING SYSTEMS, IN PARTICULAR SYSTEMS FOR FILLING ELECTRIC DRIVE BATTERIES
VANNE A FLOTTEUR POUR DISPOSITIFS DE REMPLISSAGE, NOTAMMENT POUR LE REMPLISSAGE DE BATTERIES DE TRACTION ELECTRIQUES

(30) Priorität: 02.05.1990 DE 4014103
(43) Veröffentlichungstag der Anmeldung: 22.04.1992
(73) Patentinhaber: ROVER, Daniel, D-82140 Olching (DE)
(72) Erfinder: ROVER, Daniel, D-82140 Olching (DE)
(74) Vertreter: Haft, von Puttkamer, Berngruber, Czybulka
(86) Internationale Anmeldenummer: DE9100368
(87) Internationale Veröffentlichungsnummer: WO9117577

(56) Entgegenhaltungen:
- FR-A- 2 427 692
- US-A- 4 386 141

## Beschreibung

### Schwimmerventil für Füllanlagen, insbesondere zum Füllen von elektrischen Traktionsbatterien

Die Erfindung bezieht sich auf ein Schwimmerventil gemäß dem Oberbegriff des Patentanspruches 1.

Derartige Schwimmerventile werden in Füllanlagen zum Füllen von Behältern verwendet, so z.B. zum Füllen von elektrischen Traktionsbatterien mit destilliertem oder gereinigtem Wasser nach einem Ladevorgang. Derartige Schwimmerventile sind vorzugsweise in einem Stopfen untergebracht, der in eine Öffnung des zu füllenden Behälters, z. B. die Füllöffnung der Traktionsbatterie einsteckbar ist. In der Ventilkammer des Schwimmerventils befindet sich ein Ventilkörper mit einer Ventilstange, die mit einer Schwimmerstange verbunden ist, welche durch den Stopfen nach unten in den Behälter ragt und an ihrem Ende einen Schwimmer trägt. Sobald der Flüssigkeitsstand in dem Behälter beim Füllvorgang den gewünschten Stand erreicht hat, wird der Schwimmer angehoben und zieht den Ventilkörper in eine Schließstellung des Ventils.

Füllanlagen sind in der Regel zum Füllen von mehreren Behältern ausgelegt, so daß auch entsprechend mehrere Schwimmerventile eingesetzt werden, die alle an eine Flüssigkeitsquelle, so z.B. einen hochgestellten Behälter oder ein druckbetriebenes Versorgungsnetz angeschlossen sind. Da die Menge der nachzufüllenden Flüssigkeit von Behälter zu Behälter unterschiedlich ist, sind auch die Füllzeiten für die einzelnen Behälter unterschiedlich. Die Schwimmerventile bleiben aus diesem Grunde über eine längere Zeit, so z.B. bei Traktionsbatterien über Nacht, an die Flüssigkeitsquelle angeschlossen, wobei dann natürlich sichergestellt sein muß, daß die Schwimmerventile nach Erreichen des gewünschten Flüssigkeitsstandes trotz des noch vorhandenen Druckes der Flüssigkeit sicher geschlossen gehalten werden. Bei herkömmlichen Schwimmerventilen zum Füllen von Traktionsbatterien ist dieses jedoch oftmals nicht der Fall. Insbesondere dann, wenn der Versorgungsdruck nur gering ist, z.B. wenn als Flüssigkeitsquelle ein hochgestellter Behälter verwendet wird und der statische Flüssigkeitsdruck somit dem Höhenunterschied zwischen diesem Behälter und den Traktionsbatterien entspricht, reicht dieser Druck nicht für einen sicheren Verschluß des Ventils aus, so daß trotzdem Flüssigkeit durch das Ventil wenn auch langsam fließt oder nur tropft. Auch ein geringer Flüssigkeitsverlust kann jedoch dazu führen, daß der Flüssigkeitsstand in dem Behälter über den zulässigen Wert hinaus ansteigt und der Behälter gar überläuft. Bei einem Schwimmerventil für Füllanlagen sollte demnach der Schließdruck so gering wie möglich sein, um auch bei nur geringen Flüssigkeitsdrucken ein Nachtropfen der Schwimmerventile zu vermeiden. Der Schließdruck soll hierbei so niedrig sein, daß auch bei einer Hintereinanderschaltung einer Vielzahl von Schwimmerventilen der Flüssigkeitsdruck im letzten Schwimmerventil, der durch die Leitungswiderstände schon geringer ist als bei den ersten Schwimmerventilen, noch ausreicht, um das letzte Schwimmerventil sicher geschlossen zu halten.

Andererseits soll das Schwimmerventil so ausgelegt sein, daß der Fülldruck möglichst hoch eingestellt werden kann, um die Behälter schnell zu füllen; Füllanlagen für Traktionsbatterien arbeiten z.B. mit Drucken bis zu 4 bar. Trotz dieses hohen Druckes soll das Schwimmerventil einwandfrei funktionieren und trotz der starken Strömungskräfte schnell schalten, um ein rechtzeitiges Ausschalten des Füllvorganges bei Erreichen des gewünschten Flüssigkeitsstandes sicherzustellen. Auch hierbei treten bei herkömmlichen Schwimmerventilen zum Füllen von Traktionsbatterien Probleme auf.

Ein spezielles Problem beim Füllen von Traktionsbatterien sind manchmal Wasserstoffexplosionen. Kommt es beim Füllen von mehreren Traktionsbatterien in einer Batterie zu einer solchen Wasserstoffexplosion, so muß dafür gesorgt werden, daß der Wasserstoff schnell in die Atmosphäre abgeführt wird. Es kommt jedoch trotzdem vor, daß ein Teil der Explosionsgase in das Leitungssystem eintritt, das die einzelnen Schwimmerventile miteinander verbindet. Die Explosionsgase können dann auf diesem Weg in eine voraus- oder nachgeschaltete Traktionsbatterie überschlagen und dort das vorhandene Wasserstoffgas zünden, so daß unter Umständen erhebliche Explosionsschäden auftreten können. Unabhängig davon muß auch bei anderen Füllanlagen für eine gute Entlüftung der Schwimmerventile und der Behälter gesorgt werden, um eine Rückwirkung auf vorausoder nachgeschaltete Schwimmerventile auszuschließen.

Zudem weisen bekannte Schwimmerventile eine relativ komplizierte Konstruktion auf, die eine rationelle Fertigung, z.B. in Spritzgußtechnik verhindert. Der Preis derartiger Schwimmerventile ist dementsprechend hoch.

Der Erfindung liegt die Aufgabe zugrunde, ein Schwimmerventil der in Rede stehenden Art anzugeben, das bei einfacher Konstruktion sowohl bei niedrigen als auch hohen Fülldrucken einwandfrei funktioniert, mit einem geringen Flüssigkeitsdruck bereits sicher geschlossen und geschlossen gehalten werden kann und das bei Erreichen des gewünschten Flüssigkeitsstandes sehr schnell die Flüssigkeitsströmung absperrt.

Diese Aufgabe ist gemäß der Erfindung durch die im kennzeichnenden Teil des Patentanspruches 1 angegebenen Merkmale gelöst.

Durch die Anordnung eines Verteilerraumes in den Zufluß vor der Ventilkammer und der Anordnung von möglichst großflächigen Einlässen, die im Bereich des Bodens der Ventilkammer entlang der gesamten Seitenwände gelegen sind, wird die Ventilkammer zwischen diesen Einlässen und der Abflußöffnung, die bevorzugt in der Decke der Ventilkammer angeordnet ist, gleichmäßig durchströmt, wobei der Ventilkörper im wesentlichen außerhalb dieser Strömung in einer Ausnehmung am Boden des Ventilkörpers gelegen ist. Sobald der gewünschte Flüssigkeitsstand erreicht wird, schwimmt der Schwimmer auf und hebt über die Ventilstange den Ventilkörper aus der Ausnehmung am Boden der Ventilkammer heraus. In diesem Moment gelangt die volle Unterseite des Ventilkörpers in die Strömung und wird durch diese rasch in die Schließstellung bewegt. Um möglichst die gesamten Strömungskräfte auszunutzen, hat der Ventilkörper etwa den Durchmesser der Ventilkammer, wird jedoch in dieser mit leichtem Spiel geführt. Die Oberseite des Ventilkörpers ist abgerundet und weist z.B. die Form einer flachen Kugelschale auf, die sich bei geschlossenem Ventil direkt an einen Ventilsitz anlegt, im einfachsten Falle an einen O-Ring, der die Abflußöffnung an der Decke der Ventilkammer umgibt. Diese Ausgestaltung von Ventilkörper und Ventilsitz hat den Vorteil, daß auch bei leichten Schieflagen des Ventilkörpers ein zuverlässiger Schließsitz erreicht wird.

Die Formgebung für die Unterseite des Ventilkörpers ist nicht so kritisch; es soll jedoch erreicht werden, daß schon bei einem geringen Herausheben des Ventilkörpers aus der Ausnehmung am Boden die Unterseite im wesentlichen von der gesamten Strömung beaufschlagt werden kann, um den Schließvorgang so stark wie möglich zu unterstützen. Die Form der Unterseite des Ventilkörpers kann ebenfalls abgerundet sein und z.B. der Form einer Kugelschale folgen. Andere, mehr in Richtung auf einen Kegel gehende Formen sind ebenfalls möglich.

Ebenso ist die Form der Ausnehmung am Boden der Ventilkammer in weiten Grenzen wählbar; aus fertigungstechnischen Gründen wird bevorzugt eine konische Ausnehmung gewählt. Auf jeden Fall sollte die Unterseite des Ventilkörpers und die Ausnehmung so geformt sein, daß der Ventilkörper in der Ausnehmung etwa zentriert gehalten wird. Ferner sollte der äußere Rand des Ventilkörpers, der Ober- und Unterseite voneinander trennt, etwa auf Höhe des äußeren oberen Randes der Ausnehmung liegen, gegebenenfalls leicht unterhalb dieses oberen Randes, um sicherzustellen, daß der Ventilkörper in seiner Lage in der Ausnehmung von der Strömung nicht erfaßt und in Richtung auf die Schließstellung getrieben wird. Mit einer solchen Konstruktion von Ventilkörper, Ausnehmung und Ventilkammer ist es möglich, trotz kurzer Stellwege des Ventiles eine exakte Funktion auch bei unterschiedlichen Fülldrucken zu gewährleisten.

Das Schwimmerventil gemäß der Erfindung kann neben dem Ventilgehäuse des Schwimmerventiles noch einen gegenüber dem Ventilgehäuse und dem zu füllenden Behälter offenen Kamin aufweisen, mit dem eine zuverlässige Entlüftung während des Füllvorganges möglich ist. Etwaige Explosionsgase werden über diesen Kamin rasch abgeführt. Zudem wird das Flüssigkeitszuleitungssystem zu der Ventilkammer innerhalb des Schwimmerventils mit einem Syphonsystem ausgerüstet, so daß ein Rückschlag von Explosionsgasen in voraus- bzw. nachgeschalteten Schwimmerventilen durch die in dem Syphonsystem vorhandene Flüssigkeitssäule verhindert wird.

Weitere Ausgestaltungen der Erfindung gehen aus den Unteransprüchen hervor.

Die Erfindung ist in einem Ausführungsbeispiel anhand der Zeichnung näher erläutert. In dieser stellen dar:
- Fig. 1: einen Schnitt längs ABEFG in Fig. 3 durch ein Schwimmerventil gemäß der Erfindung;

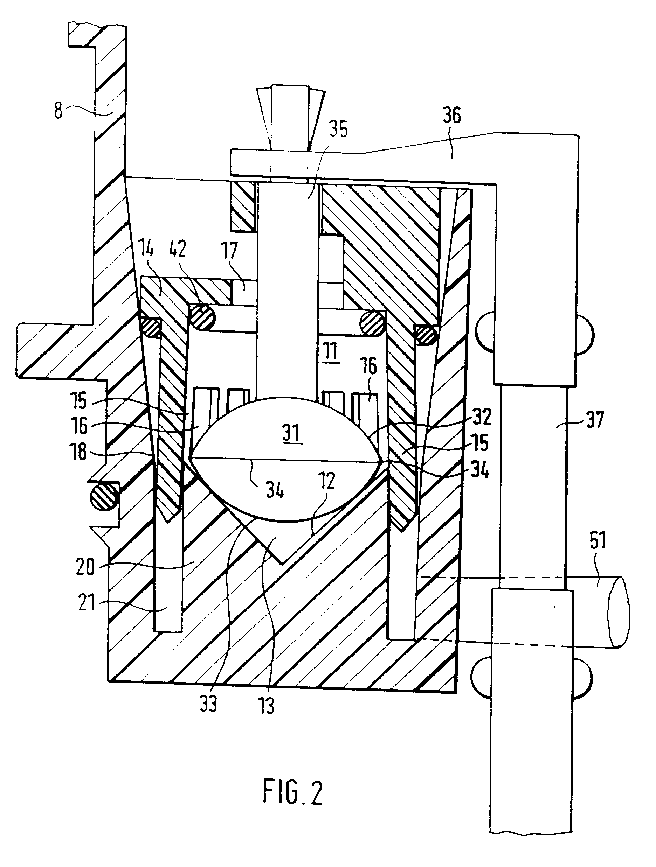

- Fig. 2: eine Detaildarstellung des Schwimmerventils im Bereich der Ventilkammer;
- Fig. 3: eine Aufsicht auf das Gehäuse des Schwimmerventils zur Erläuterung der in anderen Figuren gezeigten Schnitte;
- Fig. 4: einen Schnitt durch einen Einsatz zur Versorgung des Schwimmerventils mit Flüssigkeit;
- Fig. 5: einen Schnitt durch eine die Ventilkammer des Schwimmerventils abdeckende Verteilerhaube;
- Fig. 6: einen Schnitt durch das Gehäuse des Schwimmerventils längs ABFG in Fig. 3 und
- Fig. 7: einen Schnitt durch das Schwimmerventilgehäuse längs ABCD in Fig. 3.

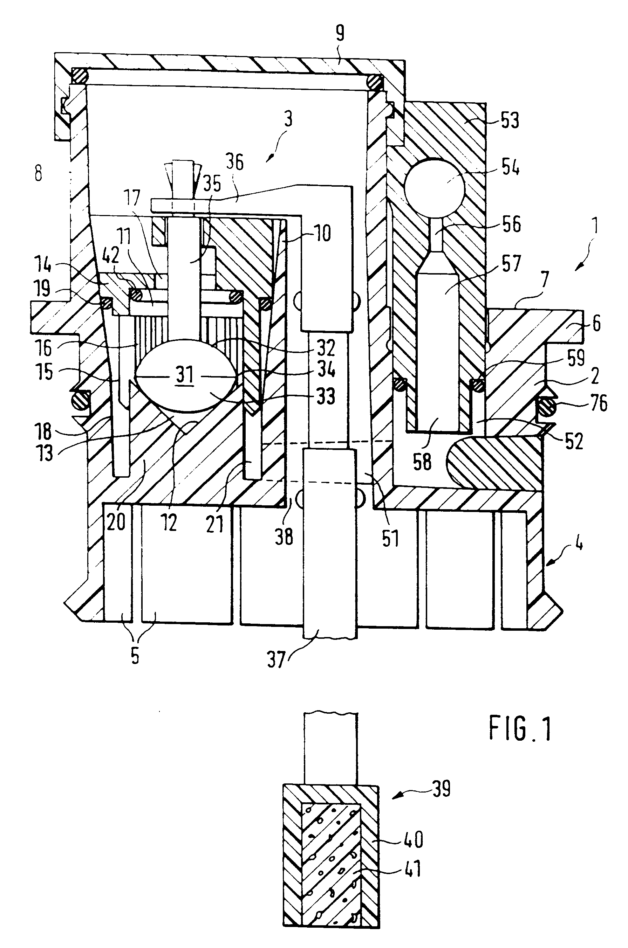

In Fig. 1 ist mit 1 ein Stopfen bezeichnet, in dessen aus Kunststoff gefertigtes Gehäuse 2 ein Schwimmerventil 3 integriert ist. Der untere Teil des Gehäuses 2 weist einen Kragen 4 mit mehreren Zungen 5 auf und kann in die Einfüllöffnung einer Traktionsbatterie eingesteckt werden, auf der er dann mit einem umlaufenden Bund aufliegt. Die Oberseite des Bundes 6 liegt in einer ebenen Gehäusefläche 7, über die der obere Teil eines etwa zylindrischen Ventilgehäuses 8 hinausragt, das mit einem Deckel 9 verschlossen werden kann und in dem ein weiteres etwa topfförmiges Gehäuse 10 für eine Ventilkammer 11 untergebracht ist.

Der Boden des Gehäuses 10 und damit der Ventilkammer 11 ist eine Kegelfläche 12, so daß dort eine Ausnehmung 13 in Form eines mit der Spitze nach unten weisenden Kegels entsteht. Die Ventilkammer 11 wird an den Seiten und an der Decke durch eine zylindrische Haube 14 begrenzt, deren Seitenwände durch mehrere schmale Zungen 15 gebildet sind, zwischen denen jeweils freie relativ breite Schlitze 16 verbleiben, und deren Decke eine mittige Öffnung 17 aufweist. Mit den Zungen 15 wird diese Haube 14 in einen Ringspalt gesteckt, der die Kegelfläche des Ventilkammerbodens 12 umrundet, und wird mit dem Rand des Deckels und zusätzlich z.B. mit einem O-Ring 19 an den leicht konischen Seitenwänden des topfförmigen Gehäuses 10 geklemmt gehalten. Der Ringspalt 18 hat eine über die Enden der Zungen 15 nach unten hinausgehende Tiefe, umgibt somit einen zylindrischen Stumpf 20 mit dem kegeligen Kammerboden 12 als Oberfläche und bildet dort einen Verteilerraum 21.

In der Ventilkammer ist ein in der Schnittebene der Fig. 1 im Querschnitt etwa ovaler Ventilkörper 31 gelegen, der, wie in Fig. 1 gezeigt, in der Ausnehmung 13 aufgenommen werden kann und einen nur geringfügig kleineren Durchmesser als die Ventilkammer 11 aufweist. Die Oberseite des Ventilkörpers folgt der Form einer flachen konvexen Kugelschale 32, die Unterseite 33 ist ebenso abgerundet geformt, wobei diese Form mehr oder minder der Form der Ausnehmung 13 angepaßt sein kann. Der äußere Rand 34 des Ventilkörpers 31 , d.h. die Grenze zwischen Ober- und Unterseite, liegt in der gezeichneten Stellung etwa auf der Höhe des oberen äußeren Randes der Ausnehmung 13.

Mittig auf der Oberseite 32 des Ventilkörpers 31 ist eine nach oben weisende Ventilstange 35 befestigt, die durch die zentrische Öffnung 17 in der Decke der Haube 14 hindurchgreift und dort mit einem Arm 36 einer Schwimmerstange 37 verbunden ist, die außerhalb des topfförmigen Gehäuses 10 nach unten geführt ist, durch eine Öffnung 38 im Boden des Stopfengehäuses 2 hindurchgreift und an ihrem Ende einen Schwimmer 39 trägt. Dieser kann in üblicher Weise z.B. ein geschlossener, mit Luft gefüllter Hohlzylinder sein. Fertigungstechnisch ist es jedoch einfacher, wenn der Schwimmer aus einem nach unten offenen Zylinder 40 besteht, in den eine Füllung 41 aus offenporigem Kunststoff eingepreßt ist.

Wird der Schwimmer 39 nach oben geschoben, so nimmt der Arm 36 der Schwimmerstange 37 die Ventilstange 35 mit, wodurch der Ventilkörper 31 sich ebenfalls nach oben bewegt, bis er mit seiner Oberseite 32 an einem O-Ring 42 anschlägt, der an der Decke der Haube 14 gelegen ist und deren zentrische Öffnung 17 umrundet. Der O-Ring 42 fungiert somit als Ventilsitz. Liegt der Ventilkörper 31 an dem O-Ring 42 an, ist auch die Öffnung 17 nach außen abgesperrt.

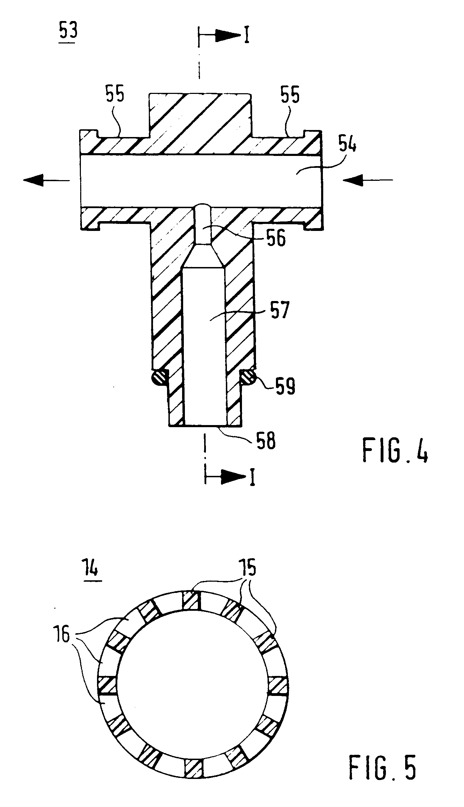

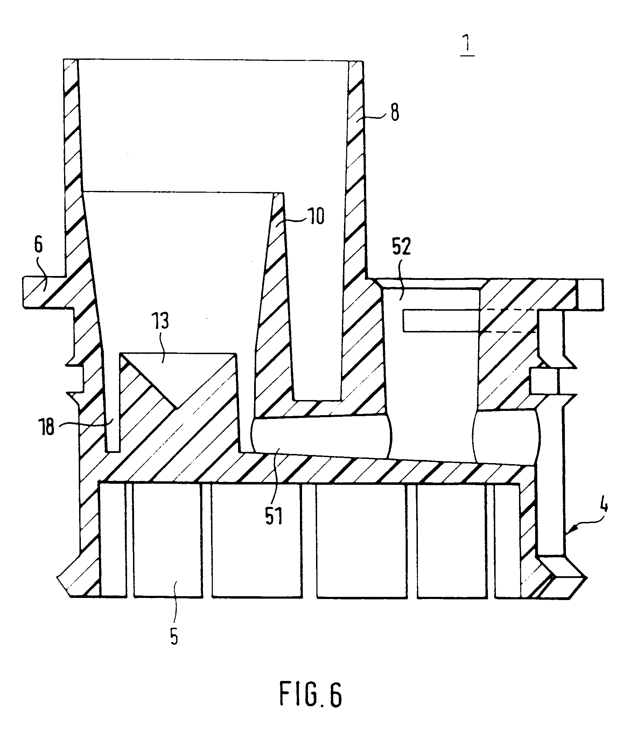

Wie in Fig. 1 gestrichelt und in Fig. 6 näher dargestellt, mündet in den Verteilerraum 21 am Boden des Ringspaltes 18 ein Querkanal 51, der von einem Stichkanal 52 ausgeht, der senkrecht in dem Stopfengehäuse angeordnet ist und neben dem Ventilgehäuse 8 liegt. In diesen Stichkanal 52 ist ein stabförmiger Einsatz 53 eingesetzt, der näher in Fig. 4 dargestellt ist. Dieser Einsatz 53 weist an seinem oberen Ende einen Kanal 54 mit zwei seitlichen Anschlüssen 55 auf, wobei von dem Querkanal 54 ein Düsenkanal 56 abzweigt, der in einen weiten Längskanal 57 mit einer Öffnung 58 am Boden des Einsatzes 53 mündet. Der Einsatz 53 ist in dem Stichkanal 52 geklemmt gehalten und mit einem O-Ring 59 abgedichtet. Einer der Anschlüsse 54 wird mit einem Schlauch verbunden, der zu einer Flüssigkeitsquelle für destilliertes oder gereinigtes Wasser führt, der andere Anschluß 54 ist entweder verschlossen oder über einen weiteren Schlauch mit dem Einsatz eines weiteren Schwimmerventiles verbunden.

Wie aus den Fig. 1 und 6 ersichtlich, bilden Ventilkammer 11, Verteilerraum 21, Querkanal 51, Stichkanal 52 und Längskanal 57 ein Syphonsystem, dessen tiefste Stelle der Querkanal 51 ist.

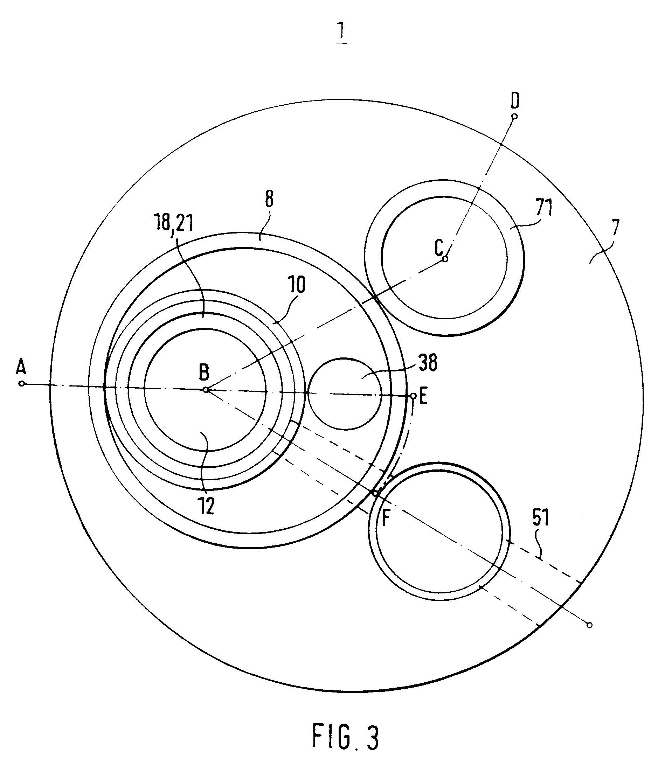

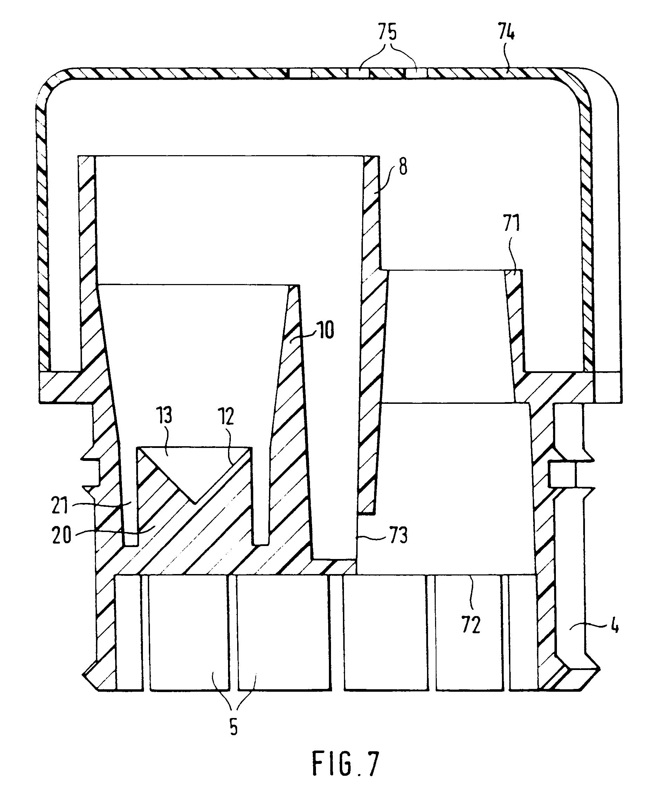

Wie aus den Fig. 3 und 7 ersichtlich, ragt über den Bund 6 des Stopfengehäuses 2 noch eine Art Kamin 71 neben dem Ventilgehäuse 8 hinaus, der den Boden des Stopfengehäuses 2 durchstößt und somit eine nach unten freie Öffnung 72 aufweist. Die Wand zwischen dem Kamin 71 und dem Ventilgehäuse 8 ist im unteren Bereich mit einem Durchbruch 73 versehen, so daß eine Verbindung zwischen dem Inneren des Ventilgehäuses 8 und dem Kamin 71 vorliegt. Der Kamin 71 kann z. B. mit einem losen Deckel abgeschlossen werden. Es ist jedoch auch möglich, entsprechend Fig. 7 auf den Bund 6 des Stopfens 1 eine Deckelhaube 74 mit einigen Gasöffnungen 75 aufzusetzen, wobei diese Deckelhaube 74 die gesamte Oberseite des Stopfens 1 mit dem darin integrierten Schwimmerventil 3 abdeckt.

Die Funktion des beschriebenen Schwimmerventils bei einer Füllanlage zum Füllen von Traktionsbatterien ist folgende:

Zum Füllen der Traktionsbatterien wird in jeden Füll- bzw. Kontrollstutzen einer Batterie ein Stopfen 1 mit dem darin integrierten Schwimmerventil eingesteckt, wobei eine sichere Haltung durch die elastischen Zungen 5 gewährleistet ist. Zusätzlich und zur Gasabdichtung ist unterhalb des Bundes 6 noch ein O-Ring 76 vorgesehen. Ein Anschluß 54 des Einsatzes 53 eines ersten Schwimmerventils wird mit dem Anschluß einer Flüssigkeitsquelle für destilliertes bzw. gereinigtes Wasser verbunden, während der andere Anschluß und diejenigen der übrigen Einsätze in Reihe geschaltet werden und der letzte Anschluß verschlossen wird. Das Wasser kann jetzt mit Druck - in der Praxis bis zu 4 bar - in das Leitungssystem gepreßt werden. In jedem Stopfen fließt das Wasser durch den Düsenkanal 56, den Längskanal 57 und den Querkanal 51 in den Verteilerraum 21, verteilt sich gleichmäßig um den Stumpf 20, steigt in dem Verteilerraum 21 hoch und tritt durch die Schlitze 16 oberhalb des oberen Randes der Ausnehmung 13 in die Ventilkammer ein, durchströmt diese und tritt aus ihr durch die Öffnung 17 in der Decke der Haube 14 aus. Das Wasser fließt anschließend durch das Innere des Ventilgehäuses 8, strömt um die Schwimmerstange 37 nach unten herab und gelangt durch die Öffnung 38 in die Traktionsbatterie.

Die Schlitze 16 sind in Breite und Höhe so bemessen, daß die Strömung durch die Ventilkammer möglichst geringen Widerstand erfährt. Während des Füllvorganges verbleibt der Ventilkörper 31 in seiner Lage innerhalb der Ausnehmung 13, so daß die Strömung über ihn hinwegführt und praktisch keine Strömungskräfte auf den Ventilkörper wirken.

Wenn in der Batterie der geforderte Flüssigkeitsstand erreicht ist, schwimmt der Schwimmer 39 auf und hebt den Ventilkörper 31 aus der Ausnehmung 13 heraus. Sobald jetzt der äußere Rand 34 des Ventilkörpers 31 in die Strömung gelangt, wird die Unterseite 32 des Ventilkörpers von der Strömung beaufschlagt, so daß der Ventilkörper 31 durch die Strömung unterstützt rasch nach oben getrieben wird, mit seiner Oberseite 32 an dem O-Ring 42 anschlägt und die Öffnung 17 absperrt. Da der Ventilkörper 31 annähernd den Durchmesser der Ventilkammer aufweist und sofort nach Herausheben des Ventilkörpers aus der Ausnehmung 13 die gesamte Unterseite des Ventilkörpers freiliegt, wird für den Schließvorgang die Strömungsenergie praktisch vollständig ausgenutzt.

In der Schließstellung wird der Ventilkörper einmal durch die Schwimmerstange 37, zum anderen jedoch auch wesentlich durch den in der Ventilkammer 11 herrschenden Druck gehalten. Durch die abgerundete Form der Oberseite 32 des Ventilkörpers und den Liniensitz des Ventilkörpers 31 am O-Ring 42 ist ein sicherer Verschluß der Öffnung 17 bereits ab sehr niedrigen Drucken gewährleistet. In der Praxis liegt dieser Schließdruck bei etwa 0,12 bar. Auch bei niedrigen Versorgungsdrucken wird somit ein Nachtropfen mit den oben erwähnten Nachteilen ausgeschlossen.

Während des Füllvorganges erfolgt die Entlüftung des Innenraumes der Traktionsbatterie über den Kamin 71. Falls es in einer Batterie zu einer Wasserstoffexplosion kommen sollte, so wird der Explosionsdruck schnell durch den Kamin 71 abgeleitet. Ein Rückschlag der Wasserstoffgase über das Schwimmerventil 3 und das Leitungssystem am Einsatz 53 zu weiteren angeschlossenen Schwimmerventilen wird zum einen dadurch verhindert, daß auch bei gefüllter Batterie in dem oben erwähnten Syphonsystem Wasser steht, das eine Sperre für die Gase bildet, zum anderen dadurch, daß auch bei einem Verdrängen der Wassersäule das Restgas aus den Ventilgehäuse über den Durchbruch 73 in den Kamin 71 und von dort nach außen strömen kann.

Der Stopfen und sämtliche Teile des Schwimmerventiles sind aus einem Kunststoffmaterial gefertigt, das säure- und basenbeständig ist, so daß das Schwimmerventil z.B. auch zum Füllen von Traktionsbatterien mit einem Elektrolyten verwendet werden kann.

Die beschriebene Konstruktion des Schwimmerventiles, insbesondere im Bereich von Verteilerraum und Ventilkammer ist beispielhaft. Es muß allerdings gewährleistet sein, daß das Füllmedium gleichmäßig um den Umfang der Ventilkammer verteilt in der Nähe von deren Boden in die Ventilkammer strömt und daß der Ventilkörper in der Offenstellung des Ventiles im wesentlichen außerhalb der Strömung liegt, während des Schließvorganges jedoch durch die Strömung in Richtung auf die Schließstellung gepreßt wird. Anstelle der gezeigten Schlitze als Einlaß in die Ventilkammer können auch andere Einlässe vorgesehen sein, so z.B. einzelne Mündungskanäle oder horizontal angeordnete Ringöffnungen etc.

## Patentansprüche

1. Schwimmerventil für Füllanlagen zum Füllen von Behältern, insbesondere elektrischen Traktionsbatterien, mit einem Ventilgehäuse, in dem eine Ventilkammer mit einem Ventilkörper aufgenommen ist, wobei die Ventilkammer mit einem Zufluß und einem zu dem Behälter führenden Abfluß versehen ist und der Ventilkörper über eine Ventil- und Schwimmerstange mit einem Schwimmer verbunden und in der Ventilkammer zwischen einer den Zu- und Abfluß freigebenden und einer den Abfluß verschließenden Stellung hin- und herschiebbar ist, dadurch gekennzeichnet, daß der Zufluß (51) für die Ventilkammer (11) in einen Verteilerraum (21) mündet, der mit Einlässen (16) in die Ventilkammer (11) kommuniziert, die entlang der Seitenwände im Bereich des Bodens (12) um den gesamten Umfang der Ventilkammer (11) verteilt angeordnet sind, daß der Abfluß eine Öffnung (17) in der Decke der Ventilkammer (11) ist, durch die die Ventilstange (35) hindurchragt, daß der Ventilkörper (31) am Boden (12) der Ventilkammer in einer Ausnehmung (13) im wesentlichen außerhalb der die Ventilkammer (11) durchfließenden Strömung gehalten ist, daß die Oberseite (32) des Ventilkörpers (31) als Sitzfläche für einen die Abflußöffnung (17) umgebenden Ventilsitz (42) ausgebildet ist, und daß die Ventilstange (35) über einen gewissen Bereich relativ zum Arm (36) der Schwimmerstange (37) beweglich angeordnet ist.

2. Schwimmerventil nach Anspruch 1, dadurch gekennzeichnet, daß der Durchmesser des Ventilkörpers (1) quer zur Verschieberichtung nur geringfügig kleiner als derjenige der Ventilkammer (11) ist.

3. Schwimmerventil nach Anspruch 1 oder 2, dadurch gekennzeichnet, daß der Ventilkörper (31) um seine Verschiebeachse, die gleichzeitig die Ventilkammerachse ist, rotationssymmetrisch ist und einen äußeren Rand (34) mit dem größten Durchmesser aufweist, durch den Ober- und Unterseite (32, 33) des Ventilkörpers (31) voneinander getrennt werden, und daß der unterhalb dieses Randes (34) liegende untere Teil des Ventilkörpers (31) sich in Richtung der Verschiebeachse verjüngt.

4. Schwimmerventil nach einem der vorhergehenden Ansprüche, dadurch gekennzeichnet, daß die Unterseite (32) des Ventilkörpers (31) an die Form der Ausnehmung (13) im Boden der Ventilkammer (11) angenähert ist.

5. Schwimmerventil nach einem der vorhergehenden Ansprüche, dadurch gekennzeichnet, daß die der Deckel der Ventilkammer (11) zugewandte Oberseite (32) des Ventilkörpers (31) eine glatte konvexe Fläche ist, insbesondere der Form einer flachen Kugelschale folgt.

6. Schwimmerventil nach Anspruch 1, dadurch gekennzeichnet, daß der Ventilsitz an der Decke der Ventilkammer (11) ein die Abflußöffnung (17) umgebender O-Ring (42) ist.

7. Schwimmerventil nach Anspruch 1, dadurch gekennzeichnet, daß der Verteilerraum (21) ein Ringraum ist, dessen Ringachse mit der Achse der Ventilkammer (11) entsprechend der Verschieberichtung des Ventilkörpers (31) zusammenfällt, und daß dieser Ringraum (21) mit den in die Ventilkammer (11) führenden Einlässen (16) versehen ist.

8. Schwimmerventil nach Anspruch 7, dadurch gekennzeichnet, daß der Ringraum (21) die Ventilkammer (11) im Bereich von deren Boden und unterhalb davon umgibt.

9. Schwimmerventil nach Anspruch 7 oder 8, dadurch gekennzeichnet, daß der Zufluß (51) in den Ringraum (21) - in dessen axialer Richtung gesehen - an dessen einem Ende, vorzugsweise am Boden in den Ringraum (21) mündet, und daß die Einlässe am anderen Ende, vorzugsweise an der Decke des Ringraumes (21) gelegen sind.

10. Schwimmerventil nach einem der vorhergehenden Ansprüche, dadurch gekennzeichnet, daß die Seitenwände und die Decke der Ventilkammer (11) von einer Haube (14) nach Art eines Käfigs gebildet werden, und daß die Seitenwände der Haube (14) Schlitze (16) aufweisen, die die Einlässe in die Ventilkammer (11) bilden.

11. Schwimmerventil nach einem der vorhergehenden Ansprüche, dadurch gekennzeichnet, daß das Zuleitungssystem in dem Schwimmerventil (3) zwischen dem Eingang (55) für ein Füllmedium und der Ventilkammer (11) ein Syphonsystem (57, 51, 21, 11) ist.

12. Schwimmerventil nach einem der vorhergehenden Ansprüche, dadurch gekennzeichnet, daß das Schwimmerventil (3) einen auf beiden Seiten offenen Kamin (71) aufweist, der neben dem Ventilgehäuse (8) des Schwimmerventiles (3) angeordnet ist und dessen eine Öffnung dem zu füllenden Behälter zugewandt ist, und daß die Wand zwischen Kamin (71) und Ventilgehäuse (8) einen Durchbruch (73) aufweist.

13. Schwimmerventil nach Anspruch 3, dadurch gekennzeichnet, daß der äußere Rand (34) des Ventilkörpers (31) dann, wenn dieser in der Ausnehmung (13) am Boden der Ventilkammer liegt, etwa in Höhe des oberen Randes dieser Ausnehmung (13) sich befindet.

## Claims

1. Float valve for filling plants for filling containers, in particular electrical traction batteries, having a valve housing in which a valve chamber with a valve body is received, wherein the valve chamber is provided with an in-flow opening and an out-flow opening which leads to the container, and the valve body is connected by means of a valve and float rod to a float, and can be moved in a reciprocating manner in the valve chamber between a position releasing the in-flow opening and out-flow opening and a position closing the out-flow opening, characterised in that the in-flow opening (51) for the valve chamber (11) issues into a distributor chamber (21) which communicates with inlets (16) into the valve chamber (11), which are disposed distributed along the lateral walls in the region of the base (12) about the entire periphery of the valve chamber (11), that the out-flow opening is an opening (17) in the cover of the valve chamber (11), through which the valve rod (35) protrudes, that the valve body (31) is held at the base (12) of the valve chamber in a recess (13) substantially outside the flow passing through the valve chamber (11), that the upper side (32) of the valve body (31) is formed as a seating surface for a valve seat (42) surrounding the out-flow opening (17) and that the valve rod (35) is disposed so as to be displaced over a certain area relative to the arm (36) of the float rod (37).

2. Float valve according to claim 1, characterised in that the diameter of the valve body (1) transverse to the displacement direction is only slightly smaller than that of the valve chamber (11).

3. Float valve according to claim 1 or 2, characterised in that the valve body (31) is rotationally symmetrical about its displacement axis which is at the same time the valve chamber axis, and comprises an outer edge (34) with the largest diameter by means of which the upper and lower side (32, 33) of the valve body (31) are separated from each other and that the lower part of the valve body (31) lying below this edge (34) tapers in the direction of the displacement axis.

4. Float valve according to any of the preceding claims, characterised in that the lower side (32) of the valve body (31) is made similar to the shape of the recess (13) in the base of the valve chamber (11).

5. Float valve according to any of the preceding claims, characterised in that the upper side (32) of the valve body (31) facing the cover of the valve chamber (11) is a smooth convex surface, in particular corresponding to the shape of an even spherical shell.

6. Float valve according to claim 1, characterised in that the valve seat at the cover of the valve chamber (11) is an O-ring (42) surrounding the out-flow opening (17).

7. Float valve according to claim 1, characterised in that the distributor chamber (21) is an annular chamber of which the annular axis coincides with the axis of the valve chamber (11) corresponding to the displacement direction of the valve body (31) and that this annular chamber (21) is provided with the inlets (16) issuing into the valve chamber (11).

8. Float valve according to claim 7, characterised in that the annular chamber (21) surrounds the valve chamber (11) in the region of the base thereof and below it.

9. Float valve according to claim 7 or 8, characterised in that the in-flow opening (51) issues into the annular chamber (21) - seen in the axial direction thereof - at one end thereof, preferably issues into the annular chamber (21) in the base and that the inlets are located at the other end, preferably at the cover of the annular chamber (21).

10. Float valve according to any of the preceding claims, characterised in that the lateral walls and the cover of the valve chamber (11) are formed in a cage-like manner from a cap (14) and that the lateral walls of the cap (14) comprise slits (16) which form the inlets into the valve chamber (11).

11. Float valve according to any of the preceding claims, characterised in that the supply system is a siphon system (57, 51, 21, 11) in the float valve (3) between the entrance (55) for a filling medium and the valve chamber (11).

12. Float valve according to any of the preceding claims, characterised in that the float valve (3) comprises a flue (71) open at both ends, which is disposed next to the valve housing (8) of the float valve (3) and of which one opening faces the container to be filled and that the wall between the flue (71) and the valve housing (8) comprises an opening (73).

13. Float valve according to claim 3, characterised in that the outer edge (34) of the valve body (31), when this valve body lies in the recess (13) at the base of the valve body, is located approximately at the level of the upper edge of this recess (13).

## Revendications

1. Vanne à flotteur pour dispositif de remplissage de récipient, notamment de batteries de traction électrique, comprenant un boîtier de vanne renfermant une chambre de vanne munie d'un corps de vanne, la chambre de vanne étant munie d'une entrée et d'une sortie menant vers le récipient et le corps de vanne étant relié à un flotteur par une tige de vanne et de flotteur et étant disposé à coulissement dans la chambre de vanne entre une position de libération de l'entrée et de la sortie et une position d'obturation de la sortie, caractérisée en ce que l'entrée (51) de la chambre de vanne (11) débouche dans une chambre de répartition (21) qui communique avec la chambre de vanne (11) par des lumières (16) qui sont disposées de manière répartie le long des parois latérales au niveau du fond (12) tout autour de la chambre de vanne (11), en ce que la sortie est une ouverture (17) au sommet de la chambre de vanne (11), à travers de laquelle passe la tige de vanne (35), en ce que le corps de vanne (31) est maintenu au fond (12) de la chambre de vanne dans un évidement (13) essentiellement en dehors de l'écoulement traversant la chambre de vanne (11), en ce que la partie supérieure (32) du corps de vanne (31) forme une face d'appui pour un siège de vanne (42) entourant l'ouverture de sortie (17), et en ce que la tige de vanne (35) est disposée de manière mobile dans une certaine plage par rapport au bras (36) de la tige de flotteur (37).

2. Vanne à flotteur selon la revendication 1, caractérisée en ce que le diamètre du corps de vanne (1) est seulement légèrement inférieur à celui de la chambre de vanne (11) transversalement à la direction de coulissement.

3. Vanne à flotteur selon la revendication 1 ou 2, caractérisée en ce que le corps de vanne (31) est à symétrie de révolution autour de son axe de coulissement, qui est aussi l'axe de la chambre de vanne, et présente un bord externe (34) ayant le diamètre le plus grand, par lequel sont séparées l'une de l'autre les parties supérieure et inférieure (32, 33) du corps de vanne (31), et en ce que la partie inférieure du corps de vanne (31) se trouvant en dessous de ce bord (34) se rétrécit dans la direction de l'axe de coulissement.

4. Vanne à flotteur selon l'une quelconque des revendications précédentes, caractérisée en ce que la partie inférieure (32) du corps de vanne (31) a une forme approximativement complémentaire de celle de l'évidement (13) au fond de la chambre de vanne (11).

5. Vanne à flotteur selon l'une quelconque des revendications précédentes, caractérisée en ce que la partie supérieure (32) du corps de vanne (31), en face du sommet de la chambre de vanne (11), est une surface lisse convexe, notamment de forme sphérique plate.

6. Vanne à flotteur selon la revendication 1, caractérisée en ce que le siège de vanne au sommet de la chambre de vanne (11) est un joint torique (42) entourant l'ouverture de sortie (17).

7. Vanne à flotteur selon la revendication 1, caractérisée en ce que la chambre de répartition (21) est une chambre annulaire dont l'axe coïncide avec l'axe de la chambre de vanne (11) selon la direction de coulissement du corps de vanne (31), et en ce que cette chambre annulaire (21) est munie des lumières (16) communiquant avec la chambre de vanne (11).

8. Vanne à flotteur selon la revendication 7, caractérisée en ce que la chambre annulaire (21) entoure la chambre de vanne (11) au niveau de son fond et au-delà.

9. Vanne à flotteur selon la revendication 7 ou 8, caractérisée en ce que l'entrée (51) dans la chambre annulaire (21), observée dans son sens axial, débouche à l'une de ses extrémités, de préférence au fond de la chambre annulaire (21), et en ce que les lumières sont disposées de l'autre extrémité, de préférence au niveau du sommet de la chambre annulaire (21).

10. Vanne à flotteur selon l'une quelconque des revendications précédentes, caractérisée en ce que les parois latérales et le sommet de la chambre de vanne (11) sont formés à partir d'un capot (14) en forme de cage, et en ce que les parois latérales du capot (14) présentent des fentes (16) qui constituent les lumières dans la chambre de vanne (11).

11. Vanne à flotteur selon l'une quelconque des revendications précédentes, caractérisée en ce que le système d'alimentation de la vanne à flotteur (3) présente entre l'entrée (55) de fluide de remplissage et la chambre de vanne (11) un système à siphon (57, 51, 21, 11).

12. Vanne à flotteur selon l'une quelconque des revendications précédentes, caractérisée en ce que la vanne à flotteur (3) est munie d'une cheminée (71) ouverte des deux côtés, qui est disposée à côté du boîtier de vanne (8) de la vanne à flotteur (3) et dont l'une des ouvertures est du côté du récipient à remplir et en ce que la paroi entre la cheminée (71) et le boîtier de vanne (8) est munie d'un passage (73).

13. Vanne à flotteur selon la revendication 3, caractérisée en ce que le bord externe (34) du corps de vanne (31) se trouve environ à la hauteur de l'évidement (13) lorsque le corps de vanne se trouve au fond de la chambre de vanne dans l'évidement (13).
